# EUROPÄISCHE PATENTSCHRIFT

(11) **EP 1 619 936 B1**
(45) Veröffentlichungstag und Bekanntmachung des Hinweises auf die Patenterteilung: **13.04.2016**
(21) Anmeldenummer: 05014710.7
(22) Anmeldetag: 06.07.2005
(51) Int. Cl.: H05B 41/288, H05B 41/38

(54) **Treiberschaltung für eine HID-Lampe und Verfahren zum Betreiben einer HID-Lampe**
Circuit and method for operating a HID lamp
Circuit et méthode pour alimenter une lampe à décharge de forte intensité

(30) Priorität: 20.07.2004 DE 102004035122
(43) Veröffentlichungstag der Anmeldung: 25.01.2006
(73) Patentinhaber: OSRAM GmbH, 80807 München (DE)
(72) Erfinder: Breuer, Christian, 81735 München (DE); Huber, Andreas, 82216 Maisach (DE); Lankes, Simon, Dr., 14612 Falkensee (DE); Veser, Alwin, 85399 Hallbergmoos (DE)

(56) Entgegenhaltungen:
- EP-A2- 0 715 487
- EP-A2- 2 182 781
- US-B2- 6 518 712

## Beschreibung

### Technisches Gebiet

Die vorliegende Erfindung betrifft eine Treiberschaltung für eine HID-Lampe mit einer Schaltungsanordnung zum Anlegen eines hochfrequenten Signals zum Zünden der Lampe und zum Anlegen eines niederfrequenten Signals zum Betrieb der Lampe nach der Zündung, wobei die Treiberschaltung ausgelegt ist, unmittelbar nach der Zündung die HID-Lampe während einer Zeitdauer mit einem hochfrequenten Signal anzusteuern. Sie betrifft überdies ein entsprechendes Verfahren zum Betreiben einer HID-Lampe.

### Stand der Technik

Generell werden HID-Lampen mit einem niederfrequenten Signal, vorzugsweise mit einem näherungsweise sinusförmigen Signal bei einer Frequenz von bevorzugt zwischen 100 Hz und 500 Hz betrieben. Zur Zündung werden dem niederfrequenten Signal Hochspannungsimpulse überlagert.

Bestimmte HID-Lampentypen werden mit einem hochfrequenten Hochspannungssignal gezündet und anschließend mit einem niederfrequenten Signal betrieben, welches bevorzugt näherungsweise rechteckförmig ist und zwischen 50 und 500 Hz liegt. Problematisch ist, dass die Lampe nach der Zündung einen Gleichrichteffekt aufweisen kann, wobei dies besonders häufig bei Lampen mit kurzem Elektrodenabstand und/oder dünnen Elektroden zu beobachten ist. Dieser Gleichrichteffekt hat sich als sehr schädlich für die Lampenlebensdauer erwiesen. Erschwerend kommt hinzu, dass im NF-Betrieb der Gleichrichteffekt nur langsam oder gar nicht verschwindet.

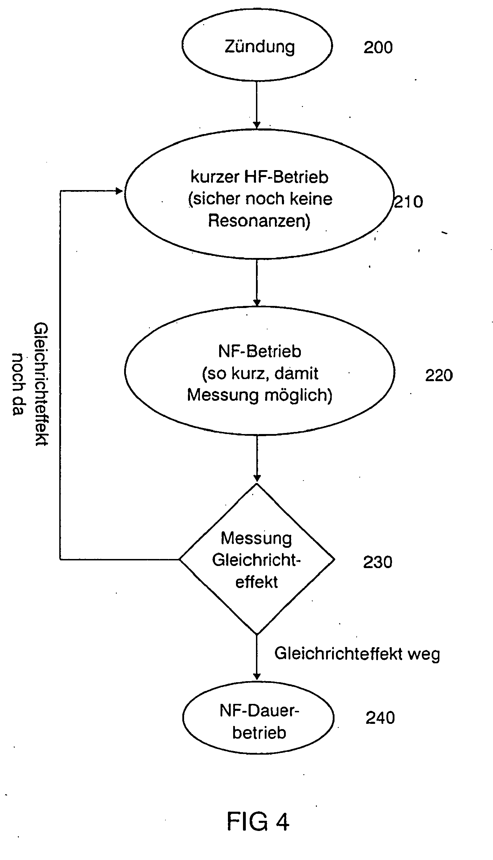

Aus der US 6 ,518,712, aus der eine gattungsgemäße Treiberschaltung und ein gattungsgemäßes Verfahren bekannt ist, siehe dort insbesondere die Figuren 4 und 8, wird deshalb der HF-Betrieb für eine kurze Zeitdauer auch nach der Zündung fortgeführt. Diese Fortführung des HF-Betriebes wird in dieser Schrift aber als unerwünscht angesehen und der Fokus dieser Schrift richtet sich auf die Eliminierung dieses HF-Betriebes.

Aus der EP 0 715 487 A2, aus der eine gattungsgemäße Treiberschaltung und ein gattungsgemäßes Verfahren bekannt ist, wird die Lampe nach dem Zünden für eine vorbestimmte Zeitdauer mit einem HF-Betrieb, dem ein niederfrequentes Signal überlagert ist, betrieben.

Dieser sogenannte HF-Delay ist fest eingestellt, was zu zwei unerwünschten Konsequenzen führt: Ist der HF-Delay zu kurz eingestellt, tritt der Gleichrichteffekt weiterhin auf. Ist der HF-Delay zu lang eingestellt, hat die Lampe bereits Druck aufgebaut, was zu akustischen Resonanzen mit den damit einhergehenden bekannten Nachteilen führt.

### Darstellung der Erfindung

Der vorliegenden Erfindung liegt deshalb die Aufgabe zugrunde, eine gattungsgemäße Treiberschaltung bzw. ein gattungsgemäßes Verfahren derart weiterzubilden, dass die Nachteile aus dem Stand der Technik überwunden werden, das heißt insbesondere, dass das Zusammentreffen von Gleichrichteffekt und NF-Betrieb weitgehend vermieden wird, genauso wie das Auftreten von akustischen Resonanzen.

Diese Aufgabe wird gelöst durch eine Treiberschaltung mit dem Merkmalen von Patentanspruch 1 und einem Verfahren mit dem Merkmalen von Patentanspruch 8.

Die vorliegende Erfindung basiert auf der Erkenntnis, dass die oben bezeichnete Aufgabe gelöst werden kann, wenn die Zeitdauer des HF-Delay variabel ausgeführt ist und zwar in Abhängigkeit von mindestens einem sich nach der Zündung der HID-Lampe einstellenden Betriebsparameter der Lampe.

Der zu wählende Betriebsparameter der Lampe soll mit möglichst großer Sicherheit bei möglichst geringem Schaltungsaufwand erkennen lassen, ob ein symmetrischer Wechsel strom die Lampe durchfließt. Ist dies der Fall, wird auf NF-Betrieb umgeschaltet oder, sofern der NF-Betrieb für die Messung verwendet wurde, der NF-Betrieb beibehalten. Ist dies nicht der Fall, wird der Heizungsbetrieb der Lampe mittels hochfrequentem Wechselstrom beibehalten oder, sofern die Messung bei NF-Betrieb vorgenommen wurde, in diesen zurückgeschaltet.

Eine bevorzugte Ausführungsform einer erfindungsgemäßen Treiberschaltung zeichnet sich dadurch aus, dass der Betriebsparameter mindestens ein Merkmal des Stroms durch die Lampe und/oder der an der Lampe abfallenden Spannung ist und die Treiberschaltung weiterhin eine Vorrichtung zum Ermitteln dieses mindestens einen Merkmals umfasst. Das Merkmal ist bevorzugt die Symmetrie der Amplitude des Stroms durch die Lampe oder der Spannung an der Lampe um den Nullwert. Bevorzugt wird dazu die Amplitude des Stroms in der einen Richtung bestimmt und anschließend die Amplitude des Stroms in der anderen Richtung. Sofern beide Werte - bis auf vorgebbare Abweichungen - betragsmäßig einander übereinstimmen, ist das Merkmal der Symmetrie gegeben.

Zusätzlich kann das Merkmal der Gleichanteil des Stroms durch die Lampe oder der Spannung an der Lampe sein. Sobald der Gleichanteil - bis auf vorgebbare Abweichungen abgesehen - gleich Null ist, liegt Symmetrie vor.

Eine vereinfachte Ausführungsform einer erfindungsgemäßen Treiberschaltung wertet ein Merkmal aus und zwar den Absolutwert der Amplitude der Spannung an der Lampe. Auf Symmetrie kann mit hoher Wahrscheinlichkeit geschlossen werden, wenn die Spannung der Lampe unterhalb eines vorgebbaren Schwellwerts liegt. Bei dieser Variante wird bevorzugt die nur in einer Richtung gemessen, wodurch der Messaufwand sinkt, jedoch verbunden mit der Erhöhung des Risikos, dass zwar die Bedingungen hinsichtlich der Amplitude der Spannung erfüllt sind, jedoch dennoch kein symmetrischer Wechselstrom durch die Lampe fließt. Alternativ oder zusätzlich kann geprüft werden, ob der Absolutwert eines Stroms durch die Lampe unterhalb einem vorgebbaren Schwellwert liegt.

Bevorzugt wird die Treiberschaltung derart ausgelegt, dass sie die Ermittlung des mindestens einen Betriebsparameters ermöglicht, während die Lampe mit einem hochfrequenten Signal betrieben wird. Diese Variante umfasst insbesondere auch den Betrieb der Lampe mit einer Kombination eines hochfrequenten und eines niederfrequenten Signals.

Alternativ kann vorgesehen sein, dass die Treiberschaltung ausgelegt ist, den mindestens einen Betriebsparameter zu ermitteln, während die Lampe mit einem niederfrequenten Signal betrieben wird, insbesondere in Pausen des hochfrequenten Signals. Der Vorteil hierin besteht, dass sich die Messung des mindestens einen Betriebsparameters wesentlich einfacher gestaltet als bei ausschließlichem HF-Betrieb der Lampe. Insbesondere ist darauf hinzuweisen, dass die Anforderungen an die Auswerteelektronik, insbesondere hinsichtlich der Verarbeitungsgeschwindigkeit, deutlich reduziert sind. Weiterhin ist von Vorteil, dass durch den Wechsel vom Betrieb mit einem HF-Signal zum Betrieb mit einem NF-Signal aufkommende akustische Resonanzen unterbrochen werden.

Das erfindungsgemäße Verfahren zum Betreiben einer HID-Lampe zeichnet sich durch folgende Schritte aus: Zunächst wird ein hochfrequentes Signal zum Zünden der Lampe angelegt, anschließend mindestens ein Betriebsparameter der Lampe gemessen, insbesondere während oder unmittelbar nach der Zündung, und in Abhängigkeit des mindestens einen gemessenen Betriebsparameters der Lampe wie folgt weiterverfahren: Entweder wird die Lampe mit einem niederfrequenten Signal betrieben oder die Lampe wird mit einem hochfrequenten Signal betrieben und die Schritte des Messens des Betriebsparameters und die Entscheidung, mit welchem Signal in Abhängigkeit des mindestens einen gemessenen Betriebsparameters die Lampe weiterbetrieben wird, werden wiederholt, so lange, bis die Lampe mit einem niederfrequenten Signal betrieben wird oder eine Abbruchbedingung erfüllt ist.

Soweit anwendbar, gelten die im Zusammenhang mit der erfindungsgemäßen Treiberschaltung erwähnten Vorteile auch für das erfindungsgemäße Verfahren.

Weitere vorteilhafte Ausführungsformen ergeben sich aus den Unteransprüchen.

### Kurze Beschreibung der Zeichnungen

Im Nachfolgenden wird nunmehr ein Ausführungsbeispiel der vorliegenden Erfindung unter Bezugnahme auf die beigefügten Zeichnungen näher beschrieben. Es zeigen:
- Figur 1a: den zeitlichen Verlauf von Strom und Spannung, beispielhaft für eine bestimmte HID-Lampe mit symmetrischer Brennspannung nach dem HF-Betrieb, beginnend mit einem Zeitpunkt vor der Zündung bis zum NF-Betrieb der Lampe bei einer aus dem Stand der Technik bekannten Treiberschaltung;
- Figur 1b: den zeitlichen Verlauf von Strom und Spannung, beispielhaft für eine bestimmte HID-Lampe mit unsymmetrischer Brennspannung nach dem HF-Betrieb, beginnend mit einem Zeitpunkt vor der Zündung bis zum NF-Betrieb der Lampe bei einer aus dem Stand der Technik bekannten Treiberschaltung;;
- Figur 2: beispielhaft den Figur 1a entsprechenden zeitlichen Verlauf bei einer erfindungsgemäßen Treiberschaltung;
- Figur 3: in schematischer Darstellung ein Signalflussdiagramm eines erfindungsgemäßen Verfahrens, bei dem die Messung bei HF-Betrieb der Lampe erfolgt; und
- Figur 4: in schematischer Darstellung ein Signalflussdiagramm eines erfindungsgemäßen Verfahrens, wobei die Messung des mindestens einen Betriebsparameters bei NF-Betrieb der Lampe erfolgt.

### Bevorzugte Ausführung der Erfindung

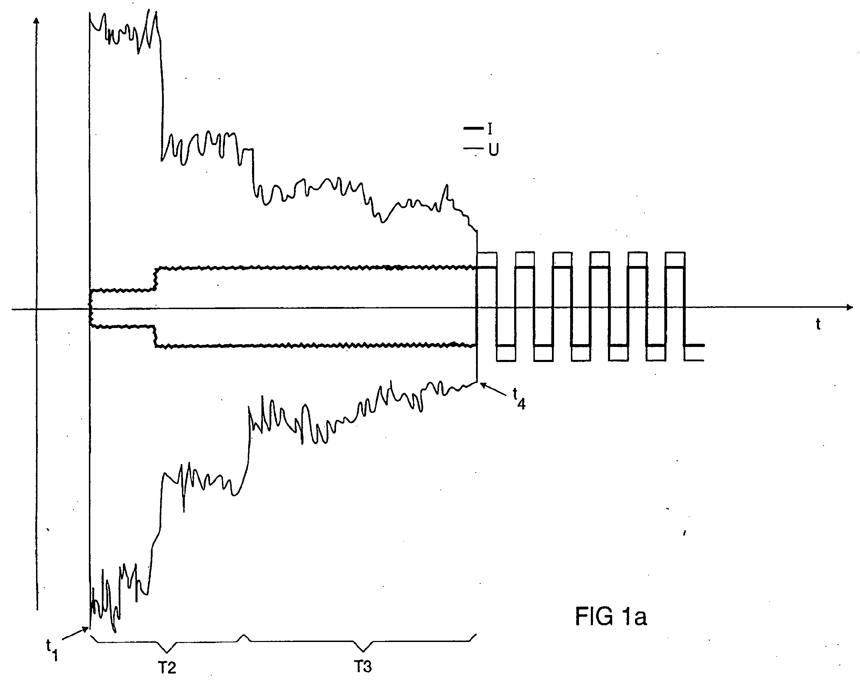

Figur 1a zeigt den zeitlichen Verlauf des Stroms I (dicke Strichstärke) durch eine HID-Lampe und der Spannung U (dünne Strichstärke) an der HID-Lampe für einen Zeitbereich, der bereits vor der Zündung der Lampe beginnt und im NF-Betrieb der Lampe endet. Die der Zeitdauern T2 und T3 wird die Lampe mit einem HF-Signal betrieben, welches bevorzugt zwischen 20 und 100 kHz liegt. Während des HF Betriebs ist in den Zeichnungen die Einhüllende des Zeitverlaufs gezeichnet. Durch die Zeitdauern T2 und T3 werden Vorgänge in der Lampe unterschieden, die beim Aufheizen der Lampenfüllung und der Elektroden ablaufen. Zum einen geschieht in der Lampenfüllung ein Übergang von einer Glimmentladung zu einer Bogenentladung und zum anderen an den Elektroden ein Übergang von einer großflächigen Entladung zu einer punktförmigen Entladung Wie bereits erwähnt, ist die Summe der Zeitdauern T2 und T3 im Stand der Technik fest, so dass nach deren Ablauf zum Zeitpunkt t4 in den NF-Betrieb übergegangen wird, bei dem die Lampe bevorzugt mit einem Signal einer Wechselfrequenz zwischen 50 und 500 Hz betrieben wird. In der Darstellung von Figur 1a sind beispielhaft Zeitverläufe für eine Exemplar einer Lampe abgebildet, die symmetrischen Verlauf von Strom und Spannung aufweist.

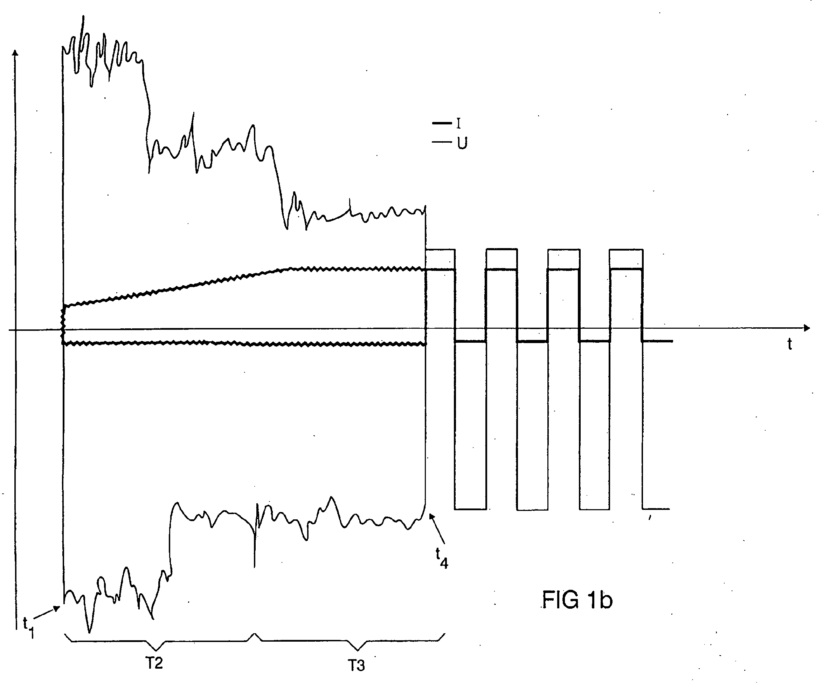

In der Darstellung von Figur 1b sind beispielhaft Zeitverläufe für eine Exemplar einer Lampe abgebildet, die unsymmetrischen Verlauf von Strom und Spannung aufweist. Wie deutlich zu erkennen, ist nach dem Zeitpunkt t4 des Umschaltens-von HF-Betrieb auf NF-Betrieb ein Gleichanteil des Stroms vorhanden. Strom und Spannung laufen nicht symmetrisch zur mit t gekennzeichneten Mittellinie, die auch Zeitachse ist.

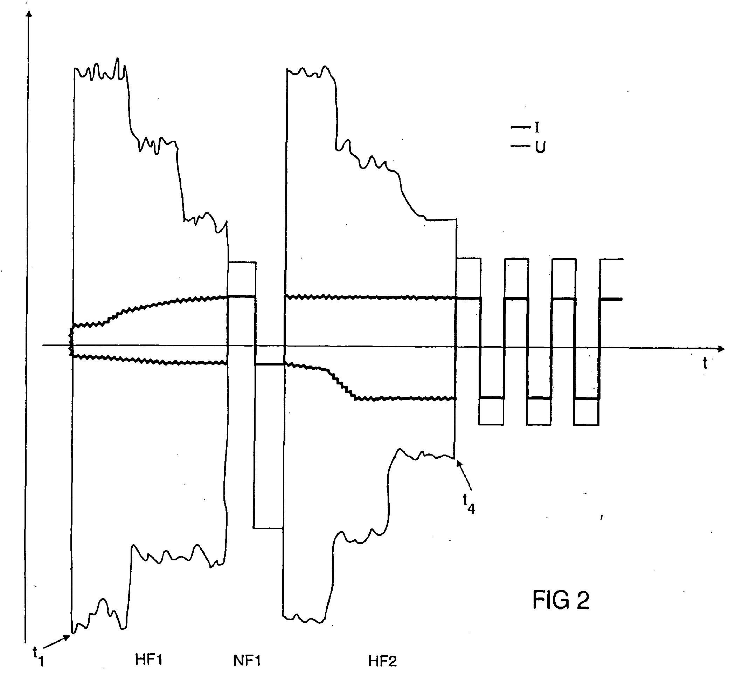

Figur 2 zeigt eine Darstellung, die dem zeitlichen Verlauf von Spannung und Strom von Figur 1a entspricht, für eine erfindungsgemäße Treiberschaltung. Zum Zeitpunkt t1 erfolgt wiederum die Zündung der Lampe. Daran schließt sich eine erste und eine zweite HF-Phase HF1-2 an, die jeweils durch eine erste NF-Phase NF1 unterbrochen werden. Ab dem Zeitpunkt t4 wird die Lampe dauerhaft mit NF betrieben.

Nach der ersten HF-Phase HF1 des Betriebs der Lampe mit einem HF-Signal wird die Lampe kurzzeitig während NF1 mit einem NF-Signal betrieben, vorliegend genau eine Periodenlänge des NF-Signals, die ausreicht, um festzustellen, ob der Strom durch die Lampe symmetrisch ist oder nicht. Wie deutlich zu erkennen, weist der Strom noch einen Gleichanteil auf, so dass die Lampe weiterhin mit einem HF-Signal betrieben wird. Die Messung und Auswertung wird wiederholt bis kein wesentlicher Gleichanteil mehr vorliegt, so dass von einer adaptiven Vorheizung gesprochen werden kann. HF und NF Phasen werden so oft wie nötig hinzugefügt. Nach dem Zeitpunkt t4 wird die Lampe im NF-Dauerbetrieb betrieben, da zum Zeitpunkt t4, das heißt insbesondere in der ersten Periodendauer des NF-Signals festgestellt wurde, dass ein symmetrischer Betrieb vorliegt, das heißt der die Lampe durchfließenden Strom keinen Gleichanteil mehr aufweist bzw. der noch vorhandene Gleichanteil unter einem vorgebbaren Grenzwert liegt.

Die in Figur 2 dargestellte NF-Phase 1 dauert üblicherweise in der Größenordnung von 5 Millisekunden, während die Auswertung innerhalb von Mikrosekunden erfolgt. Die Dauer der HF-Phasen 1 und 2 können fest vorgegeben werden, beispielsweise in der Größenordnung von einer halben Sekunde liegen, können jedoch auch mit zunehmender Anzahl in ihrer Zeitdauer reduziert sein.

Würde in Figur 2 während der NF-Phase 1 nur die zweite Halbwelle des NF-Betriebs ausgewertet werden, so würde eine niedrige Spannung und verhältnismäßig hoher Strom festgestellt werden, die fälschlicherweise zu der Annahme führen würden, dass kein Gleichrichteffekt mehr vorliegt. Erst die Auswertung auch der ersten Halbwelle des NF-Signals führt zu der Erkenntnis, dass noch kein symmetrischer Betrieb vorliegt.

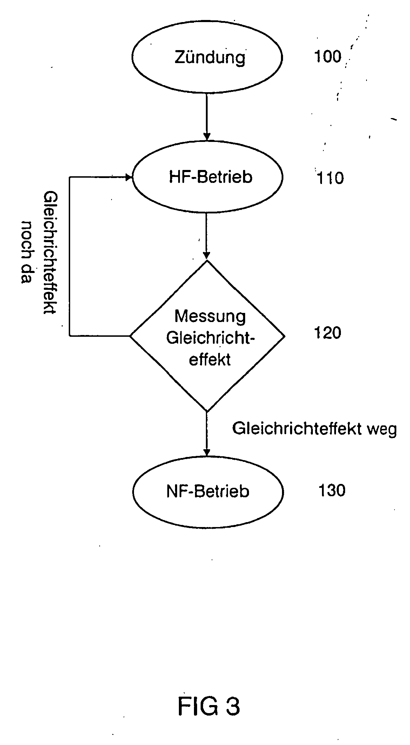

Figur 3 zeigt in schematischer Darstellung ein Signalflussdiagramm für eine besonders einfache Ausführungsform eines erfindungsgemäßen Verfahrens. Im Schritt 100 wird die Lampe gezündet und anschließend, siehe Schritt 110, im HF-Betrieb betrieben. Im Schritt 120 findet eine Messung des Gleichrichteffekts statt, wobei, wenn der Gleichrichteffekt noch vorhanden ist, in Schritt 110 zurück gezweigt wird und, wenn der Gleichrichteffekt nicht mehr vorhanden ist, in den NF-Betrieb, siehe Schritt 130, geschaltet wird.

Eine weitere Ausführungsform eines erfindungsgemäßen Verfahrens, die insbesondere mit der Darstellung von Figur 2 korreliert ist, ist in Figur 4 dargestellt. Nach der Zündung im Schritt 200 wird die Lampe kurzzeitig mit einem HF-Signal betrieben, siehe Schritt 210, wobei die Dauer so gewählt ist, dass mit Sicherheit akustische Resonanzen ausgeschlossen werden können. Anschließend wird im Schritt 220 die Lampe möglichst kurzzeitig mit einem NF-Signal betrieben, wobei die Zeitdauer so kurz ist, dass die Messung des Gleichrichteffekts ermöglicht wird, siehe Schritt 230. Ist der Gleichrichteffekt noch vorhanden, wird wieder in den HF-Betrieb geschaltet, siehe Schritt 210. Ist der Gleichrichteffekt nicht mehr vorhanden, wird in den NF-Dauerbetrieb, siehe Schritt 240, geschaltet.

## Patentansprüche

1. Treiberschaltung für eine HID-Lampe mit einer Schaltungsanordnung zum Anlegen eines hochfrequenten Signals zum Zünden der Lampe und zum Anlegen eines niederfrequenten Signals zum Betrieb der Lampe nach der Zündung,
wobei die Treiberschaltung ausgelegt ist, unmittelbar nach der Zündung die HID-Lampe während einer Zeitdauer mit einem hochfrequenten Signal anzusteuern,
**dadurch gekennzeichnet,**
**dass** die Zeitdauer von mindestens einem sich nach der Zündung einstellenden Betriebsparameter der Lampe, der erkennen lässt, ob ein symmetrischer Wechselstrom die Lampe durchfließt, abhängt.

2. Treiberschaltung nach Anspruch 1,
**dadurch gekennzeichnet,**
**dass** der Betriebsparameter mindestens ein Merkmal des Stroms durch die Lampe und/oder der an der Lampe abfallenden Spannung ist und die Treiberschaltung weiterhin eine Vorrichtung zum Ermitteln dieses mindestens einen Merkmals umfasst.

3. Treiberschaltung nach Anspruch 2,
**dadurch gekennzeichnet,**
**dass** das Merkmal die Symmetrie der Amplitude des Stroms durch die Lampe oder der Spannung an der Lampe um den Nullwert ist.

4. Treiberschaltung nach einem der Anspruche 2 oder 3,
**dadurch gekennzeichnet,**
**dass** das Merkmal der Gleichanteil des Stroms durch die Lampe oder der Spannung an der Lampe ist.

5. Treiberschaltung nach einem der Ansprüche 2 bis 4,
**dadurch gekennzeichnet,**
**dass** ein Merkmal der Absolutwert der Amplitude der Spannung an der Lampe und/oder der Absolutwert der Amplitude des Stroms durch die Lampe ist.

6. Treiberschaltung nach einem der vorhergehenden Anspruche,
**dadurch gekennzeichnet,**
**dass** die Treiberschaltung ausgelegt ist, den mindestens einen Betriebsparameter zu ermitteln während die Lampe mit einem hochfrequenten Signal betrieben wird.

7. Treiberschaltung nach einem der vorhergehenden Ansprüche,
**dadurch gekennzeichnet,**
**dass** die Treiberschaltung ausgelegt ist, den mindestens einen Betriebsparameter zu ermitteln, während die Lampe mit einem niederfrequenten Signal betrieben wird, insbesondere in Pausen des hochfrequenten Signals.

8. Verfahren zum Betreiben einer HID-Lampe, folgende Schritte umfassend:
a) Anlegen eines hochfrequenten Signals zum Zünden der Lampe;
b) Messen mindestens eines Betriebsparameters der Lampe unter Anlegen eines hochfrequenten oder eines niederfrequenten Signals an die Lampe, insbesondere während oder unmittelbar nach der Zündung, wobei der Betriebsparameter erkennen lässt, ob ein symmetrischer Wechselstrom die Lampe durchfließt; und
c) in Abhängigkeit des mindestens einen gemessenen Betriebsparameters der Lampe:
c1) Betreiben der Lampe mit einem niederfrequenten Signal; oder
c2) Betreiben der Lampe mit einem hochfrequenten Signal und Wiederholen der Schritte b) und c) bis die Lampe gemäß Schritt c1) betrieben wird oder eine Abbruchbedingung erfüllt ist.

## Claims

1. Driver circuit for an HID lamp having a circuit arrangement for applying a radiofrequency signal for the purpose of starting the lamp and for applying a low-frequency signal for the purpose of operating the lamp after starting,
the driver circuit being designed to drive the HID lamp, immediately after starting, using a radiofrequency signal for a period of time,
**characterized**
**in that** the period of time depends on at least one operating parameter for the lamp which is set after starting, which operating parameter makes it possible to discern whether a symmetric alternating current flows through the lamp.

2. Driver circuit according to Claim 1,
**characterized**
**in that** the operating parameter is at least one feature of the current through the lamp and/or of the voltage present across the lamp, and the driver circuit also comprises an apparatus for determining this at least one feature.

3. Driver circuit according to Claim 2,
**characterized**
**in that** the feature is the symmetry of the amplitude of the current through the lamp or of the voltage across the lamp with respect to the zero value.

4. Driver circuit according to either of Claims 2 and 3,
**characterized**
**in that** the feature is the DC component of the current through the lamp or of the voltage across the lamp.

5. Driver circuit according to one of Claims 2 to 4,
**characterized**
**in that** a feature is the absolute value of the amplitude of the voltage across the lamp and/or the absolute value of the amplitude of the current through the lamp.

6. Driver circuit according to one of the preceding claims,
**characterized**
**in that** the driver circuit is designed to determine the at least one operating parameter whilst the lamp is operated using a radiofrequency signal.

7. Driver circuit according to one of the preceding claims,
**characterized**
**in that** the driver circuit is designed to determine the at least one operating parameter whilst the lamp is operated using a low-frequency signal, in particular during intervals in the radiofrequency signal.

8. Method for operating an HID lamp, comprising the following steps:
a) applying a radiofrequency signal for the purpose of starting the lamp;
b) measuring at least one operating parameter for the lamp by applying a radiofrequency or a low-frequency signal to the lamp, in particular during or immediately after starting, wherein the operating parameter makes it possible to discern whether a symmetric alternating current flows through the lamp; and
c) as a function of the at least one measured operating parameter for the lamp:
c1) operating the lamp using a low-frequency signal; or
c2) operating the lamp using a radiofrequency signal and repeating steps b) and c) until the lamp is operated in accordance with step c1) or a discontinuation condition is fulfilled.

## Revendications

1. Circuit d'excitation pour une lampe HID comprenant un agencement de circuit servant à appliquer un signal à haute fréquence pour allumer la lampe et à appliquer un signal à basse fréquence pour le fonctionnement de la lampe après l'allumage,
le circuit d'excitation étant adapté pour commander la lampe HID immédiatement après l'allumage avec un signal à haute fréquence pendant une durée,
**caractérisé en ce que**
la durée dépend d'au moins un paramètre de fonctionnement de la lampe s'ajustant après l'allumage, et qui indique si un courant alternatif symétrique parcourt la lampe.

2. Circuit d'excitation selon la revendication 1,
**caractérisé en ce que**
le paramètre de fonctionnement est au moins une caractéristique du courant à travers la lampe et/ou de la chute de tension au niveau de la lampe, et le circuit d'excitation comprend en outre un dispositif servant à déterminer la au moins une caractéristique.

3. Circuit d'excitation selon la revendication 2,
**caractérisé en ce que**
la caractéristique est la symétrie de l'amplitude du courant à travers la lampe ou de la tension au niveau de la lampe autour de zéro.

4. Circuit d'excitation selon l'une des revendications 2 ou 3,
**caractérisé en ce que**
la caractéristique est la composante continue du courant à travers la lampe ou de la tension au niveau de la lampe.

5. Circuit d'excitation selon l'une des revendications 2 à 4,
**caractérisé en ce que**
une caractéristique est la valeur absolue de l'amplitude de la tension au niveau de la lampe et/ou la valeur absolue de l'amplitude du courant à travers la lampe.

6. Circuit d'excitation selon l'une des revendications précédentes,
**caractérisé en ce que**
le circuit d'excitation est adapté pour déterminer le au moins un paramètre de fonctionnement pendant le fonctionnement de la lampe avec un signal à haute fréquence.

7. Circuit d'excitation selon l'une des revendications précédentes,
**caractérisé en ce que**
le circuit d'excitation est adapté pour déterminer le au moins un paramètre de fonctionnement pendant le fonctionnement de la lampe avec un signal à basse fréquence, notamment dans des pauses du signal à haute fréquence.

8. Procédé pour faire fonctionner une lampe HID, comprenant les étapes suivantes :
a) appliquer un signal à haute fréquence pour allumer la lampe ;
b) mesurer au moins un paramètre de fonctionnement de la lampe en appliquant à la lampe un signal à haute fréquence ou à basse fréquence, notamment pendant ou immédiatement après l'allumage, le paramètre de fonctionnement indiquant si un courant alternatif symétrique traverse la lampe ; et
c) en fonction du au moins un paramètre de fonctionnement mesuré de la lampe :
c1) faire fonctionner la lampe avec un signal à basse fréquence ; ou
c2) faire fonctionner la lampe avec un signal à haute fréquence et répéter les étapes b) et c) jusqu'au fonctionnement de la lampe selon l'étape c1) ou jusqu'à ce qu'une condition d'interruption soit remplie.
